Europäisches Patentamt

European Patent Office

Office européen des brevets

(11) Veröffentlichungsnummer: 0 034 808

A2

(12) **EUROPÄISCHE PATENTANMELDUNG**

(21) Anmeldenummer: 81101184.0

(22) Anmeldetag: 19.02.81

(51) Int. Cl.³: H 02 P 13/30
H 02 M 5/257

(30) Priorität: 20.02.80 JP 19239/80

(43) Veröffentlichungstag der Anmeldung:
02.09.81 Patentblatt 81/35

(84) Benannte Vertragsstaaten:
AT CH DE FR GB LI SE

(71) Anmelder: FUJI ELECTRIC CO. LTD.
1-1, Tanabeshinden, Kawasaki-ku
Kawasaki 210(JP)

(72) Erfinder: Yanase, Takao, Dipl.-Ing.
2-7-10 Yabe Sagamihara-shi
Kanagawa(JP)

(72) Erfinder: Nakahara, Kazuhiro, Dipl.-Ing.
1-27-13 Fujimoto Kokubunji-shi
Tokyo(JP)

(74) Vertreter: Mehl, Ernst, Dipl.-Ing. et al,
Postfach 22 01 76
D-8000 München 22(DE)

(54) Schaltungsanordnung zur Kompensation einer Phasendifferenz.

(57) Die Erfindung betrifft eine Schaltungsanordnung zur Kompensation einer Phasendifferenz zwischen den Istwerten von Mehrphasen-Lastströmen ($i_R$, $i_S$, $i_T$) und Sollströmen ($i_R^*$, $i_S^*$, $i_T^*$) in einem Leistungs-Umrichter. Dabei werden in einem Koordinatenwandler (80) die Mehrphasen-Ströme ($i_R^*$, $i_S^*$, $i_T^*$) in Zweiphasen-Ströme $I\cos \omega t$, $I\sin \omega t$ umgewandelt. Ein nachgeschalteter Vektordreher (70) verschiebt die Phasenlage der Zweiphasen-Ströme um die Phasendifferenz $k\omega$. Anschließend werden in einem nachgeschalteten Koordinatenwandler (60) die Zweiphasen-Ströme $I\cos(\omega t + k\omega)$, $I\sin(\omega t + k\omega)$ mit verschobener Phasenlage in Mehrphasen-Ströme (($i_R^*$), ($i_S^*$), ($i_T^*$)) zur Ansteuerung des Leistungs-Umrichters (2) umgewandelt, so daß die Phasenverschiebung zwischen den Istwerten ($i_R$, $i_S$, $i_T$) der Mehrphasen-Ströme und den Sollströmen ($i_R^*$, $i_S^*$, $i_T^*$) kompensiert ist.

Durch diese Kompensation kann die Phasenlage zwischen einem Sollstrom und einem Istwert des Laststroms bei einem Leistungsumrichter in Übereinstimmung gebracht werden, so daß für Rechenschaltungen nicht die mit Störungen behafteten Istströme, sondern die Sollströme verwendet werden können.

./...

FIG 1

FUJI ELECTRIC CO., LTD
Kawasaki / Japan

Mein Zeichen
VPA 80 P 8583 E

0034808

## Schaltungsanordnung zur Kompensation einer Phasendifferenz

(Es wird die Priorität aus der japanischen Anmeldung T 55-19239 vom 20.02.1980 beansprucht)

Die Erfindung betrifft eine Schaltungsanordnung zur Kompensation der Phasendifferenz zwischen den Istwerten von Mehrphasen-Lastströmen und Sollströmen in einem Leistungs-Umrichter zur Steuerung von Mehrphasen-Lastströmen variabler Frequenz durch Sollströme.

Bekanntlich existiert bei Direktumrichtern, die eine Last mit variablem Wechselstrom versorgen, eine Verschiebung zwischen der Phasenlage des Sollstroms, mit dem der Direktumrichter angesteuert wird und der Phasenlage des Iststroms, der vom Direktumrichter an die Last abgegeben wird. Diese Verschiebung ist in einem bestimmten Intervall im wesentlichen proportional der Frequenz f des Stroms. Um diese Phasenverschiebung zu eliminieren, könnte man den Sollstrom dem Direktumrichter über einen Kompensationsschaltkreis zuführen, der einen Differentiator enthält. Eine derartige Schaltung ist beispielsweise in der Vorbereitungsunterlage Nr. 78 von Saijo et al. beschrieben, die zur gemeinsamen Konferenz der vier japanischen elektrotechnischen Kommissionen 1977 herausgegeben wurde. Differentiatoren erzeugen z.B. aus einem eingangsseitigen Sinussignal ($E = \sin \omega t$) ein Kosinussignal ($dE/dt = \omega \cos \omega t$) und verändern somit die Phasenlage des Eingangssignals und verstärken die Amplitude des Eingangssignal um den Faktor $\omega$. Wenn aber der dem Differentiator zugeführte Sollstrom eine Welligkeit enthält, wird diese Welligkeit ebenfalls verstärkt und das Ausgangssignal des Differentiators, das als Steuersignal für den Direktumrichter dient, weist eine starke Welligkeit auf. Diese Erscheinung wirkt sich störend auf das Steuersystem mit Direktumrichter und Last aus.

Sid 2 Bih / 18.02.1981

Da sich, wie oben beschrieben, die Phasenverzögerung im Direktumrichter im wesentlichen proportional zur Frequenz des Stroms ändert, kann ein Kompensator wie der Differentiator die Phasenverschiebung nur näherungsweise kompensieren. Es ist daher unmöglich, Phase und Amplitude zwischen dem dem Direktumrichter zugeführten Sollstrom und dem vom Direktumrichter an die Last gelieferten Iststrom auf diese Weise völlig in Übereinstimmung zu bringen.Wenn als Last eine Drehfeldmaschine verwendet wird, deren Verhalten zur genauen Regelung der Drehgeschwindigkeit simuliert wird, wie dies z.B. in einer feldorientierten Regelung der Fall ist, kann der Sollstrom nicht als Eingabewert für die Berechnung der Stellgröße verwendet werden. Statt dessen muß der eine starke Welligkeit enthaltende Iststrom für diesen Zweck verwendet werden, was die Genauigkeit der Berechnung und damit der Regelung beeinträchtigt.

Aufgabe der Erfindung ist es daher, einen Kompensationsschaltkreis so auszugestalten, daß in einem Leistungs-Umrichter, wie z.B. einem Direktumrichter, zur Regelung der an die Last abgegebenen momentanen Leistung Phase und Amplitude eines Sollstroms und eines Iststroms in Übereinstimmung gebracht werden.

Diese Aufgabe wird erfindungsgemäß dadurch gelöst,daß ein Koordinatenwandler die Mehrphasen-Ströme in Zweiphasen-Ströme umwandelt, daß ein nachgeschalteter Vektordreher auf Sinus und Cosinus der Phasendifferenz anspricht und die Phasenlage der Zweiphasen-Ströme um diese Phasendifferenz verschiebt und daß ein nachgeschalteter Koordinatenwandler die Zweiphasen-Ströme mit verschobener Phasenlage in Mehrphasen-Ströme zur Ansteuerung des Leistungs-Umrichters umwandelt, so daß die Phasenverschiebung zwischen den Istwerten der Mehrphasen-Ströme und den Sollströmen kompensiert ist. Damit wird der Sollstrom in Amplitude und Phasenlage in Übereinstimmung mit dem vom Leistungsumrichter an die Last gelieferten Iststrom gehalten.

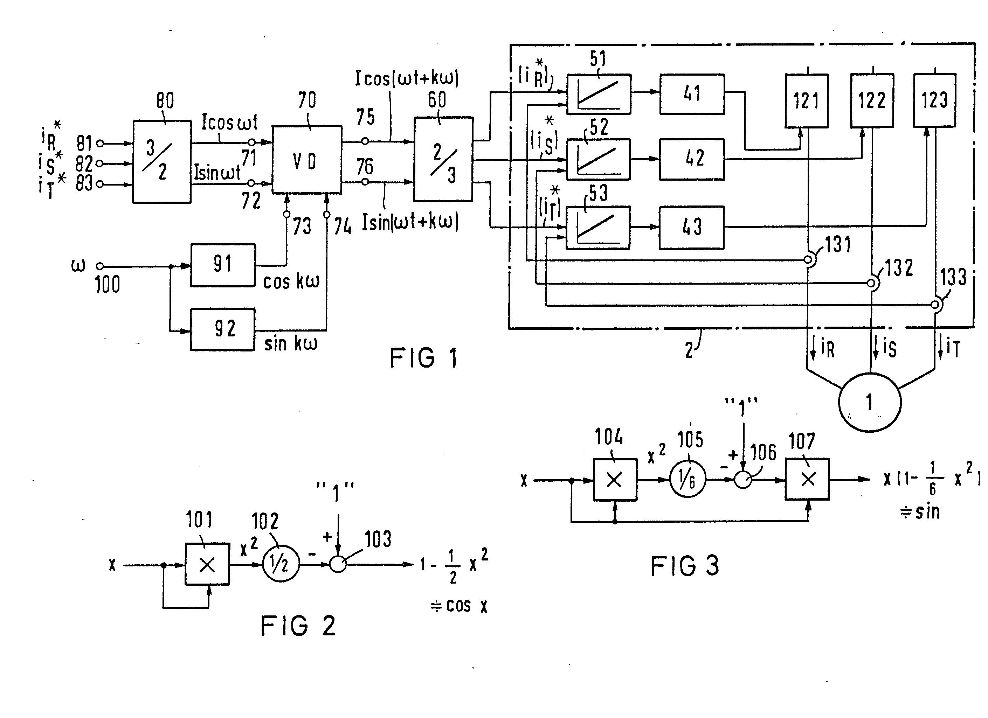

Ausführungsbeispiele der Erfindung werden nachfolgend anhand der Figuren 1 bis 6 näher erläutert.

Figur 1 zeigt ein Blockschaltbild eines Ausführungsbeipiels. Ein Direktumrichter 2 bekannter Ausführung enthält Halbleiterventile 121 bis 123, die von Reglern 51 bis 53 und Stellgliedern 41 bis 43 gesteuert werden und eine Asynchronmaschine 1 mit einem drehphasigen Wechselstrom $i_R$, $i_S$, $i_T$ variabler Frequenz speisen. Die Ströme $i_R$, $i_S$, $i_T$ werden mit Stromfühlern 131 bis 133 abgegriffen und jeweils den Stromreglern 51 bis 53 in Gegenkopplung zugeführt. Figur 1 zeigt auch eine Anordnung, die die Phasenlage der Sollströme $i_R{}^*$, $i_S{}^*$, $i_T{}^*$ (wobei der Stern hier den Sollwert kennzeichnet), die an den Direktumrichter 2 abgegeben werden und die Istströme $i_R$, $i_S$, $i_T$, die vom Direktumrichter 2 an die Asynchronmaschine 1 abgegeben werden, in Übereinstimmung bringt. Mit 60 ist ein Zwei- zu Drei-Phasen-Koordinatenwandler bezeichnet, mit 70 ein Vektordreher, mit 80 ein Zweiphasen- zu Dreiphasen-Koordinatenwandler, mit 91 ein Cosinusgenerator, mit 92 ein Sinusgenerator und mit 81 bis 83, 71 bis 76 und 100 Anschlußklemmen. Koordinatenwandler und Vektordreher sind beispielsweise aus dem Artikel "Das Prinzip der Feldorientierung - die Grundlage für die Transvektor-Regelung von Drehfeldmaschinen" aus Siemens-Zeitschrift, Oktober 1971, Heft 10, Seiten 755 bis 760 bekannt.

Der dargestellte Kompensator arbeitet wie folgt: Die Ströme $i_R{}^*$, $i_S{}^*$, $i_T{}^*$ werden ohne Phasenverschiebung den Eingangsklemmen 81 bis 83 des Dreiphasen- zu Zweiphasen-Koordinatenwandlers 80 zugeführt, wo sie in zweiphasige Ströme $I\cos\omega t$, $I\sin\omega t$ umgewandelt werden. Die Ströme $I\cos\omega t$, $I\sin\omega t$ werden den Eingangsklemmen 71, 72 des Vektordrehers 70 zugeführt. Der Vektordreher 70 verschiebt diese jeweils mit den Ausgangssignalen $\cos k\omega$, $\sin k\omega$ des Cosinusgenerators 91 und des Sinusgenerators 92 um

den Winkel $k\omega$ in positiver Richtung. Die Ströme Icos $(\omega t + k\omega)$, Isin $(\omega t + k\omega)$ werden über die Eingangsklemmen 75, 76 dem Zweiphasen- zu Dreiphasen-Koordinatenwandler 60 zugeführt, wo die zweiphasigen Ströme in dreiphasige Ströme umgewandelt werden. Diese dreiphasigen Ströme werden als phasenverschobene Sollwerte $(i_R^*)$, $(i_S^*)$, $(i_T^*)$ den Stromreglern 51 bis 53 zugeführt.

Dem Cosinusgenerator 91 und dem Sinusgenerator 92 wird über die Eingangsklemme 100 ein Signal mit der Winkelgeschwindigkeit $\omega^*$ für die Ströme $i_R^*$, $i_S^*$, $i_T^*$ zugeführt, wobei ein Signal mit der Winkelgeschwindigkeit $k\omega^*$, das der Winkelgeschwindigkeit $\omega^*$ proportional ist in entsprechende Signale $\cos k\omega$ und $\sin k\omega$ umgewandelt werden, die an den Ausgängen anstehen. Folglich sind die Ströme $(i_R^*)$, $(i_S^*)$, $(i_T^*)$, die den Stromreglern 51 bis 53 zugeführt werden, im Vergleich zu den Strömen $i_R^*$, $i_S^*$, $i_T^*$, die den Eingangsklemmen 81 bis 83 zugeführt werden, um den Winkel $k\omega$ voreilend phasenverschoben. Die Proportionalitätskonstante k ist so gewählt, daß diese voreilende Phasenverschiebung gleich der nacheilenden Phasenverschiebung durch den Direktumrichter ist, wobei die vom Direktumrichter gelieferten Istströme $i_R$, $i_S$, $i_T$ in Phase mit den Sollströmen $i_R^*$, $i_S^*$, $i_T^*$ gehalten werden. Der Dreiphasen- zu Zweiphasen-Koordinatenwandler 80 wird eingesetzt, um die dreiphasigen Ströme in zweiphasige Ströme umzuwandeln, da die Phasenverschiebung bei zweiphasigen einfacher als bei dreiphasigen Strömen durchgeführt werden kann.

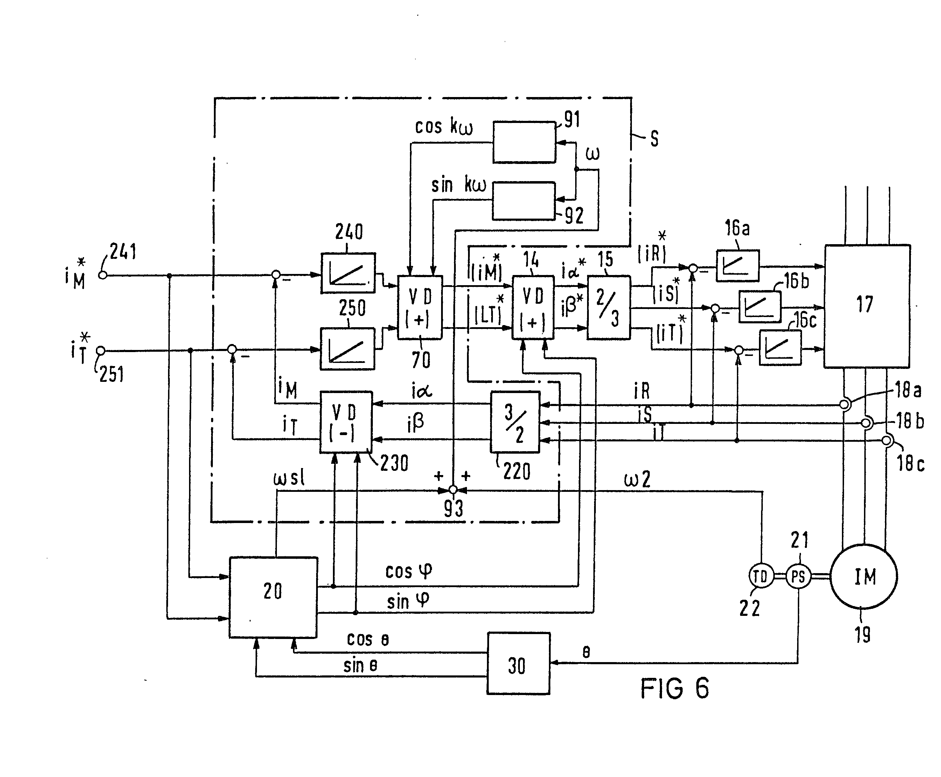

Der Dreiphasen- zu Zweiphasen-Koordinatenwandler 80, der Zweiphasen- zu Dreiphasen-Koordinatenwandler 60 und der Vektordreher 70 sind bekannt und werden daher nicht näher beschrieben. Die Figuren 6, 7 und 8 der japanischen Patentschrift Nummer 50-34725 enthalten beispielsweise die detaillierte Schaltungsanordnung. Ein Vektordreher ist auch aus der DE-OS 29 19 786 bekannt. Der Cosinusgenerator 91 und der Sinusgenerator 92 sind jeweils in den Figuren 2 und 3 dargestellt, die den Schaltungsaufbau zeigen. Die Generatoren arbeiten im Prinzip nach folgenden Gleichungen:

$$\cos x = 1 - \frac{x^2}{2!} + \frac{x^4}{4!} - \frac{x^6}{6!} + \dots \approx 1 - \frac{x^2}{2!}$$

$$\sin x = x - \frac{x^3}{3!} + \frac{x^5}{5!} - \frac{x^7}{7!} \dots \approx x \left(1 - \frac{1}{6} x^2\right)$$

In Figur 2 ist mit 101 ein Multiplizierer, mit 102 ein Koeffizientenmultiplizierer und 103 ein Addierer bezeichnet. In Figur 3 sind mit 104 und 107 Multiplizierer, mit 105 ein Koeffizientenmultiplizierer und mit 106 ein Addierer bzeichnet.

Im folgenden wird ein Ausführungsbeispiel beschrieben, bei dem die vorliegende Erfindung bei einer Vektorregelung bzw. feldorientierten Regelung eingesetzt wird. Dazu wird zunächst die Vektorregelung an sich erläutert.

Nachdem  in den letzten Jahren Thyristorumrichter mit einem Ausgang variabler Frequenz und variabler Spannung auf den Markt kamen, wurden zunehmend Hochleistungs-Wechselstromantriebe mit variabler Drehzahl entwickelt. Die feldorientierte Regelung wurde als neues Regelungs-verfahren bekannt, das es erlaubt, Asynchronmaschinen wie Gleichstrommaschinen zu verwenden, obwohl sie mit Wechselstrom gespeist werden.

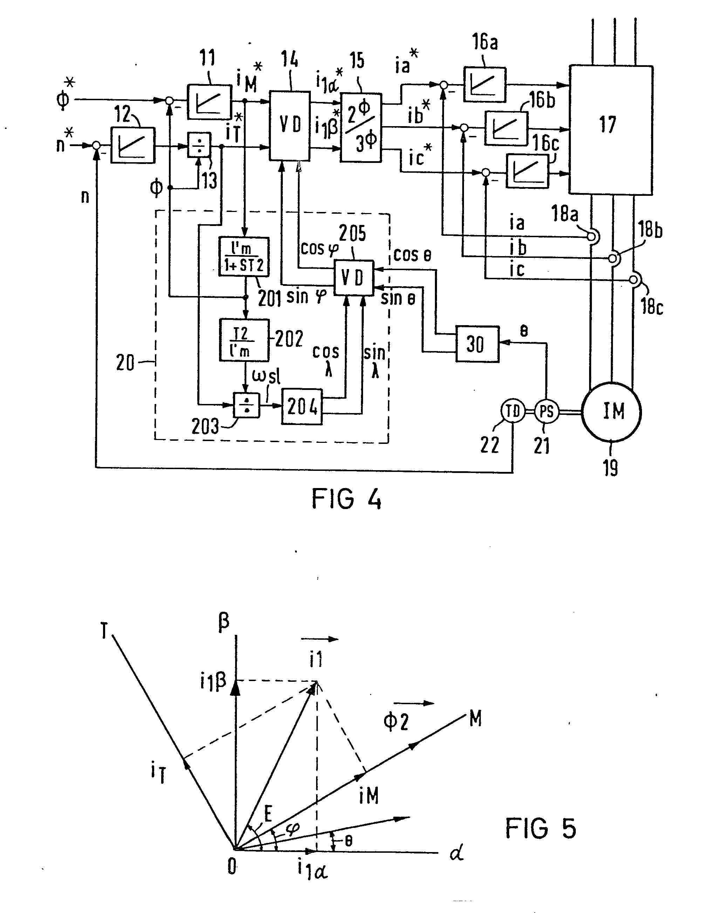

Figur 4 zeigt ein Blockschaltbild einer feldorientierten Regelung für einen Asynchronmotor und Figur 5 zeigt ein einphasiges Vektordiagramm, das auf der Wechselstromtheorie der Asynchronmaschine beruht.

Wie in den Figuren 4 und 5 dargestellt, beruht die Vektorregelung darauf, daß der Vektor $\vec{i}_1$ des Statorsstroms, der dem Vektor der magnetischen Kraft durch den Stator einer Asynchronmaschine 19 entspricht, in eine Komponente $i_M$

in Richtung des Vektors des magnetischen Flusses $\emptyset_2$ und in eine Komponente $i_T$ aufgespalten wird, die senkrecht zur Komponente $i_M$ steht. Diese Komponenten werden unabhängig voneinander geregelt, so daß der Asynchronmotor wie eine Gleichstrommaschine geregelt werden kann. Die Komponente $i_M$ wird "Erregerstrom" genannt, da sie dem Feldstrom einer Gleichstrommaschine entspricht, und die Komponente $i_T$ wird "Wirkstrom" genannt, da sie dem Ankerstrom einer Gleichstrommaschine entspricht. Die Vektordarstellung nach Figur 5 zeigt ein festes rechtwinkliges Koordinatensystem mit einem Ursprungspunkt Null, der der Rotationsachse der Asynchronmaschine entspricht, einer Achse $\alpha$, die der Windungsachse einer Phase a des Stators entspricht und einer Achse $\beta$, die senkrecht auf der Achse $\alpha$ steht. Ferner ist ein rotierendes senkrechtes Koordinatensystem mit demselben Ursprung dargestellt, das eine Achse M, die der Achse des magnetischen Flusses entspricht, und eine Achse T, die senkrecht auf der Achse M steht, enthält. Der Statorstromvektor $\vec{i_1}$, der Vektor $\vec{\emptyset_2}$ des magnetischen Flusses und die Windungsachse einer Phase a des Rotors bilden mit der Achse $\alpha$ des festen rechtwinkligen Koordinatensystem jeweils Winkel $\varepsilon$, $\varphi$ und $\theta$, die sich bekannterweise mit der Zeit ändern.

Bei der in Figur 4 dargestellten Schaltungsanordnung wird ein Sollwert $i_M{}^*$ für den Erregerstrom durch einen Flußregler 11 vorgegeben, der einen Istwert $\emptyset$ des magnetischen Flusses mit einem Sollwert $\emptyset^*$ in Übereinstimmung bringen soll. Ein Sollwert für das Drehmoment wird durch einen Drehzahlregler 12 erzeugt, der einen Drehzahlistwert n, der durch einen Drehzahlfühler (Tachodynamo) 22 erfaßt wird, mit einem Drehzahl-Sollwert n* in Übereinstimmung bringt. Der Sollwert für das Drehmoment wird mit einem Dividierer 13 durch den Istwert $\emptyset$ des magnetischen Flusses geteilt. Dadurch wird ein Sollwert $i_T{}^*$ für den Wirkstrom erzeugt. Die Signale für den Sollvektor des Statorstroms, die als aufeinander senkrecht stehende Komponenten $i_M{}^*$,

$i_T$* im rotierenden rechtwinkligen Koordinatensystem gegeben sind, werden zusammen mit den Signalen eines Einheitsvektors (cos $\varphi$, sin $\varphi$) des magnetischen Fluß-vektors $\vec{\varnothing}_2$ einem Vektordreher 14 zugeführt. Der Vektordreher 14 wandelt den Sollvektor ($i_M$*, $i_T$*) mit Hilfe des Einheitswechslers des magnetischen Flusses (cos $\varphi$, sin. $\varphi$) in den Sollvektor ($i_{1\alpha}$*, $i_{1\beta}$*) im rechtwinkligen Koordinatensystem $\alpha$-$\beta$ um.

Diese Koordinatentransformation erfolgt nach folgenden Gleichungen:

$$i_{1\alpha}* = i_M* \cos \varphi - i_T* \sin \varphi$$

$$i_{1\beta}* = i_M* \sin \varphi + i_T* \cos \varphi$$

Die Sollwerte $i_{1\alpha}$*, $i_{1\beta}$* werden durch den Koordinatenwandler 15 nach folgenden Gleichungen in die dreiphasigen Sollwerte ia*, ib*, ic* umgewandelt:

$$ia* = i_{1\alpha}*$$

$$ib* = -\frac{1}{2} i_{1\alpha}* + \frac{\sqrt{3}}{2} i_{1\beta}*$$

$$ic* = -\frac{1}{2} i_{1\alpha}* - \frac{\sqrt{3}}{2} i_{1\beta}*$$

Die Sollwertsignale ia*, ib*, ic* werden jeweils den Stromreglern 16a, 16b, 16c zugeführt. Diese sollen die Istwerte der Phasenausgangsströme ia, ib, ic des Direktumrichters 17, die jeweils mit Stromfühlern 18a, 18b, 18c abgegriffen werden, mit den Sollströmen ia*, ib*, ic* in Übereinstimmung bringen.

Damit ist die gewünschte Vektorregelung ausgeführt. Wie aus der vorhergehenden Beschreibung hervorgeht, ist es notwendig, für diese Vektorregelung den Vektor $\vec{\varnothing}_2$ des magnetischen Flusses zu erfassen. Die aufeinander senk-

recht stehenden Komponenten $\phi_{2\alpha}$, $\phi_{2\beta}$ des Vektors $\vec{\phi_2}$ des magnetischen Flusses können im rechtwinkligen Koordinatensystem $\alpha$-$\beta$ jeweils wie folgt ausgedrückt werden:

$$\phi_{2\alpha} = \phi_2 \cos\varphi$$

$$\phi_{2\beta} = \phi_2 \sin\varphi$$

Nach Figur 4 muß der Vektordreher 14 mit den Komponenten $\cos\varphi$, $\sin\varphi$ auf den Achsen $\alpha$, $\beta$ des Einheitsvektors versorgt werden. Der magnetische Flußregler 11 und der Dividierer 13 benötigen Eingangsgrößen, die der Größe $\phi$ des magnetischen Flußvektors $\vec{\phi_2}$ entsprechen.

Der in Figur 4 mit einer gestrichelten Linie 20 umgebene Schaltungsteil erfaßt indirekt auf dem Wege der Berechnung diesen magnetischen Flußvektor und wird als Rechner für den magnetischen Fluß nach dem Strommodell bezeichnet, da die Werte $\phi$, $\cos\varphi$, und $\sin\varphi$ aus den Sollwerten $i_M{}^*$, $i_T{}^*$ für die Erregerströme und Wirkströme berechnet werden. Der Rechner 20 für den magnetischen Flußvektor enthält ein Element 201 mit einer Zeitverzögerung erster Ordnung, mit einer Verstärkung, die der Koppelinduktivität lm' zwischen Stator-und Rotor-Stromkreis der Asynchronmaschine entspricht und mit einer Zeitkonstanten, die der elektrischen Zeitkonstanten T2 des Rotorstromkreises der Asynchronmaschine entspricht. Das Element 201, das eingangsseitig mit dem Sollwert $i_M{}^*$ für den Erregerstrom gespeist wird, liefert ein Ausgangssignal, das dem Betrag $\phi$ des Flußvektors $\vec{\phi_2}$ des Rotorkreises entspricht. Das Ausgangssignal des Elements 201 wird sowohl dem Regler 11 für den magnetischen Fluß als auch dem Dividierer 13 zugeführt. Der Rechner 20 für den Vektor des magnetischen Flusses enthält auch ein Proportionalelement 202, dessen Verstärkung dem Verhältnis der Zeitkonstanten T2 und der Koppelinduktivität lm' des Rotorkreises entspricht. Der Ausgang des Elements 201 ist mit dem Eingang des Proportional-Elements 202 verbunden, an dessen Ausgang das Signal (T2/lm') $\emptyset$ ansteht. Ein Dividierer 203 dividiert den Sollwert $i_T{}^*$ für den Wirkstrom durch das Ausgangssignal (T2/lm') $\emptyset$ des Proportional-Elements 202 und erzeugt ein Ausgangssignal, das der Schlupffrequenz $\omega sl$ ($=d\varphi/dt-d\theta/dt$) entspricht, die wie folgt ausgedrückt wird:

$$\omega sl = \frac{lm'}{T_2} \cdot \frac{i_T{}^*}{\emptyset}$$

Das Ausgangssignal, daß der Schlupffrequenz $\omega sl$ entspricht wird einem zweiphasigen Integrator 204 (zweiphasiger Sinus-Wellenoszillator) zugeführt, der Ausgangssignale $\cos\lambda$, $\sin\lambda$ einer zweiphasigen Sinus-Wellenform erzeugt. Diese Ausgangssignale haben eine Frequenz, die der Eingangsspannung $\omega sl$ entspricht und eine Größe von 1. Da $\omega sl = d\varphi/dt-d\theta/dt$, besteht folgende Beziehung:

$$\lambda = \int \omega_{sl}\, dt = \varphi - \theta$$

Die Ausgangssignale $\cos\lambda$, $\sin\lambda$ des zweiphasigen Integrators 204 werden ebenso wie die Signale für den Einheitsvektor $\cos\theta$, $\sin\theta$, die die Position des Rotors anzeigen, einem Vektordreher 205 zugeführt. Der Einheitsvektor $\cos\theta$, $\sin\theta$ wird mit einem Fühler 21 für die Rotorstellung erfaßt, der mit der Rotorwelle des Asynchronmotors 19 verbunden ist und dem eine Rechenschaltung 30 für die Rotorstellung nachgeschaltet ist. Der Vektordreher 205 erzeugt ein Signal für die Komponenten $\cos\varphi$, $\sin\varphi$ auf den Achsen $\alpha, \beta$ des Einheitsvektors für den magnetischen Fluß. Die Ausgangssignale $\cos\varphi$, $\sin\varphi$ des Vektordrehers werden zur Koordinatenumwandlung durch den Vektordreher 14 verwendet. Diese kurz beschriebene feldorientierte Regelung für den Asynchronmotor 19 ist bekannt und ähnlich der Regelung, wie sie in dem bereits genannten Artikel in "Siemens-Zeitschrift",Oktober 1971,Heft 10, Seiten 755 bis 760 beschrieben ist.

Ein entsprechendes Modell des Asynchronmotors zur Ableitung des Arbeitsprinzips der Rechenschaltung 20 für
den Vektor des magnetischen Flusses und ein Verfahren
zur Ableitung einer Gleichung für ein solches Modell
wurde nicht beschrieben, da sie keinen direkten Einfluß
auf die vorliegende Erfindung haben. Einzelheiten können
jedoch der Druckschrift EPA-79-3 entnommen werden, die
bei einem Treffen der japanischen elektrotechnischen
Kommission für Energieanwendung am 16. März 1979 von
Herrn Kani Suzuki und zwei anderen unter dem Titel
"Drehzahlveränderliche Antriebseinheit zur Speisung
eines Direktumrichters mit Wechselstrom und Leistung
einer Umrichtereinheit" herausgegeben wurde.

Ein Ausführungsbeispiel, bei dem die vorliegende Erfindung
bei der erwähnten Vektorregeleinheit angewendet wird,
wird im folgenden beschrieben.

Fig. 6 zeigt ein Blockschaltbild mit einer derartigen
Einheit. Dabei ist der Fühler 21 für die Rotorstellung
direkt mit den Asynchronmotor 19 verbunden und liefert
ein Signal $\theta$, das die Rotorstellung anzeigt an eine
Rechenschaltung 30 für die Rotorposition. Diese Rechenschaltung 30 erzeugt die Ausgangssignale $\cos\theta$ und $\sin\theta$.
Der Rechenschaltung 20 für den magnetischen Fluß werden
der Sollwert $i_M{}^*$ für den Erregerstrom, der Sollwert $i_T{}^*$
für den Wirkstrom und die Signale $\cos\theta$ und $\sin\theta$ zugeführt. Die Rechenschaltung 20 erzeugt daraus Signale
$\cos\varphi$, $\sin\varphi$, für die Stellung des magnetischen Flusses
für den Rotor und ein Signal für die Winkelfrequenz $\omega$ sl
des Schlupfes. Die Signale $\cos\varphi$, $\sin\varphi$ werden den
Vektordrehern 14, 230 zugeführt. Das Signal $\omega$ sl wird in
einem Addierer 93 zum Ausgangssignal $\omega_2$ des Drehzahlfühlers 22 (Tachodynamo), der direkt mit der Asynchronmaschine 19 gekuppelt ist, addiert und erzeugt damit ein
Signal mit der Winkelgeschwindigkeit $\omega$ der Sollströme.
Die Eingangssignale $(i_M{}^*)$, $(i_T{}^*)$ des Vektordrehers 14 werden in diesem durch Koordinatenwandlung vom Koordinatensystem für den magnetischen Fluß des Rotors zum Koordinatensystem für den magnetischen Fluß des Stators in die Signale $i_\alpha$ *, $i_\beta$ * umgewandelt. Die Signale $i_\alpha$ *, $i_\beta$ * werden durch den Dreiphasen- zu Zweiphasen-Koordinatenwandler 15 in die dreiphasigen Sollströme $i_R$, $i_S$, $i_T$ für den Direktumwandler umgewandelt.

Gemäß der vorliegenden Erfindung wird der Vektorregelung eine Anordnung hinzugefügt, die als Block S mit gestrichelten Linien gekennzeichnet ist und einen Dreiphasen- zu Zweiphasen-Koordinatenwandler 220, einen Vektordreher 230, Stromregler 240, 250, einen Vektordreher 70, einen Cosinusgenerator 91, einen Sinusgenerator 92 und die Addierstufe 93 enthält.

Genauer gesagt wandelt der Dreiphasen- zu Zweiphasen-Koordinatenwandler 220 die dreiphasigen Istströme $i_R$, $i_S$, $i_T$ in die Zweiphasen-Signale $i_\alpha$, $i_\beta$ um, die einem Eingang des Vektordrehers 230 zugeführt sind, während dem anderen Eingang desselben Signale $\cos \varphi$, $\sin \varphi$ für die Position des magnetischen Flusses des Rotors zugeführt werden. Der Vektordreher 230 erzeugt als Ausgangssignale die Istwerte des Erregerstroms $i_M$ und des Wirkstroms $i_T$, die dann den Stromreglern 240, 250 invertiert zugeführt werden, Den Anschlüssen 241, 251 wird jeweils ein Signal $i_M$* für den Erregerstrom und ein Signal $i_T$* für den Wirkstrom zugeführt. Diese Signale dienen jeweils als Eingangssignale für die Stromregler 240 bzw. 250. Die Ausgangssignale der Stromregler 240, 250 werden im Vektordreher 70 um den Winkel $k\omega$ phasenverschoben und dann dem nächsten Vektordreher 14 zugeführt. Die Proportionalitätskonstante k ist so gewählt, daß sich diese Phasenverschiebung und die Phasenverzögerung im Direktumrichter ausgleichen, wobei die Phasenlage der vom Direktumrichter an die Last gespeisten Istströme in Übereinstimmung mit der Phasenlage der Sollströme gebracht werden kann. Die in Figur 6 gezeigte Anordnung liefert im Vergleich zur Anordnung nach Figur 1 eine hohe Genauigkeit in der Berechnung und damit auch in der Regelung, da der Vektordreher zur Phasenverschiebung um den Winkel $k\omega$ in einem Signalpfad vorgesehen ist, der sich auf ein Koordinatensystem für die magnetischen Flüsse bezieht und somit Eingangs- und Ausgangssignale als Gleichstromgrößen behandelt werden können, während dies bei der Ausführung nach Figur 1 Wechselstromsignale sind. Da der Phasenverschiebungswinkel im Direktumrichter nahezu proportional der Frequenz der Ströme ist, war es im allgemeinen schwierig, diesen Verschiebungswinkel völlig durch einen Verschiebungswinkel des Vektordrehers zu kompensieren. Mit der Anordnung nach Figur 6 können Istwert und Sollwert des Erregerstroms $i_M$ und des Wirkstroms $i_T$ durch die Stromregler 240, 250 in Übereinstimmung gebracht werden. Dementsprechend können für den Schaltkreis zur Nachbildung des magnetischen Flusses in der Asynchronmaschine, d.h. für die Rechenschaltung 20 für den magnetischen Fluß die Sollströme ($i_M^*$, $i_T^*$) mit geringer Welligkeit anstelle der Istströme mit hoher Welligkeit verwendet werden, so daß die Genauigkeit der Berechnung verbessert werden kann.

Wie beschrieben, kann der Kompensationsschaltkreis nach der vorliegenden Erfindung die Phasendifferenz zwischen Istwerten und Sollwerten für Lastströme in einem Leistungsumrichter, wie z.B. einem Direktumrichter, der die Momentanwerte der an eine Last abgegebene Leistung regelt, mit genügender Genauigkeit eliminieren.

6 Figuren

2 Patentansprüche

Patentansprüche

1. Schaltungsanordnung zur Kompensation der Phasendifferenz zwischen den Istwerten von Mehrphasen-Lastströmen und Sollströmen in einem Leistungs-Umrichter zur Steuerung von Mehrphasen-Lastströmen variabler Frequenz durch Sollströme, d a d u r c h   g e k e n n - z e i c h n e t , daß ein Koordinatenwandler (80) die Mehrpasen-Ströme ($i_R{}^*$, $i_S{}^*$, $i_T{}^*$) in Zweiphasen-Ströme ($I \cos \omega t$, $I \sin \omega t$) umwandelt, daß ein nachgeschalteter Vektordreher (70) auf Sinus und Kosinus der Phasendifferenz $k\omega$ anspricht und die Phasenlage der Zweiphasen-Ströme um diese Phasendifferenz $k\omega$ verschiebt und daß ein nachgeschalteter Koordinatenwandler (60) die Zweiphasen-Ströme ($I \cos (\omega t + k\omega)$, $I \sin (\omega t + k\omega)$) mit verschobener Phasenlage in Mehrphasen-Ströme (($i_R{}^*$), ($i_S{}^*$), $i_T{}^*$)) zur Ansteuerung des Leistungs-Umrichters (2) umwandelt, so daß die Phasenverschiebung zwischen den Istwerten ($i_R$, $i_S$, $i_T$) der Mehrphasen-Ströme und den Sollströmen ($i_R{}^*$, $i_S{}^*$, $i_T{}^*$) kompensiert ist.

2. Schaltungsanordnung nach Anspruch 1, d a d u r c h g e k e n n z e i c h n e t , daß Cosinus und Sinus der Phasendifferenz durch einen Cosinus- bzw. Sinusgenerator (91, 92) erzeugt werden, denen ein Signal ($\omega$ bzw. $\omega^*$) zugeführt wird, das der Grundfrequenz eines vom Leistungsumrichter an die Last abgegebenen Stroms ($i_R$, $i_S$, $i_T$) entspricht.

FIG 1

FIG 2

FIG 3

$i_R^*$ 81
$i_S^*$ 82
$i_T^*$ 83

80  3/2

Icosωt 71
Isinωt 72

ω 100

91  cos kω
92  sin kω

70  VD  73

75  Icos(ωt+kω)
76  74  Isin(ωt+kω)

60  2/3

$(i_R^*)$
$(i_S^*)$
$(i_T^*)$

51  52  53

41  42  43

121  122  123

131  132  133

iR
iS
iT

2

1

FIG 2

x  101  ×  $x^2$  102  1/2  "1"  103  +  −  $1 - \frac{1}{2} x^2$  ≒ cos x

FIG 3

x  104  ×  $x^2$  105  1/6  106  "1"  +  −  107  ×  $x(1 - \frac{1}{6} x^2)$  ≒ sin

0034808

FIG 4

FIG 5

FIG 6

0034808